# NOUVEAU FASCICULE DE BREVET EUROPEEN

(11) **EP 0 956 987 B2**
(45) Date de publication et mention de la décision concernant l'opposition: **06.01.2010**
(45) Mention de la délivrance du brevet: 06.08.2003
(21) Numéro de dépôt: 99460035.1
(22) Date de dépôt: 14.05.1999
(51) Int. Cl.: B60J 1/16

(54) **"Dispositif d'obturation d'une baie ménagée dans la carrosserie d'un véhicule, et procédé de fabrication et de montage correspondant"**
Abschlussvorrichtung für Karosserieöffnung und Verfahren zum Herstellen und Montieren
Closing device for an opening in the body of a vehicle, and method of manufacturing and corresponding mounting

(30) Priorité: 14.05.1998 FR 9806327
(43) Date de publication de la demande: 17.11.1999
(73) Titulaire: Wagon SAS, 79300 Bressuire (FR)
(72) Inventeur: Chauvin, René, 79300 Bressure (FR)
(74) Mandataire: Vidon, Patrice

(56) Documents cités:
- EP-A- 0 445 685
- EP-A- 0 673 820
- EP-A- 0 778 168
- DE-A- 3 237 226
- DE-U- 9 212 967
- FR-A- 2 552 483
- US-A- 2 701 162
- US-A- 4 850 139
- US-A1- 5 522 191
- US-A1- 5 613 323

## Description

Le domaine de l'invention est celui des baies de véhicule. Plus précisément, l'invention concerne les dispositifs d'obturation d'une baie ménagée dans la carrosserie d'un véhicule, comprenant une partie fixe et une partie mobile. Plus précisément encore, l'invention concerne de tels dispositifs d'obturation présentant un aspect affleurant sur la carrosserie, et pourvus d'un panneau mobile.

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe qui viennent pincer simultanément les bords de la glace et de l'ouverture ménagée dans la carrosserie, avec une garniture d'étanchéité. Un exemple de cette technique est présenté dans le document FR-A-2 552 483.

Une autre technique est décrite dans le document de brevet EP-A-0 778 168, au nom du même déposant que la présente demande. Le dispositif d'obturation présenté dans ce document comprend une partie fixe et une partie mobile par rapport à la partie fixe. Cette partie mobile est reliée à la partie fixe par des éléments fonctionnels qui assurent la mobilité requise et qui sont rapportée sur la face de la partie fixe tournée vers l'intérieur du véhicule.

On peut ainsi obtenir un aspect esthétique amélioré, sans l'impression visuelle de rupture due au cadre. La glace apparaît simplement comme une portion transparente de la carrosserie.

La fabrication et/ou le montage d'un tel dispositif d'obturation présentent cependant quelques difficultés. Notamment, la réalisation de l'ouverture dans la partie fixe est une opération minutieuse et complexe.

Par ailleurs, la mise en place des éléments fonctionnels, et leur fixation, par exemple par collage, doivent être effectués de façon très précise. Le montage de la partie mobile, qu'il soit effectué avant ou après celui des éléments fonctionnels, est également peu aisé.

Le stockage, le transport et l'installation sur la carrosserie du dispositif complet nécessitent également un certain nombre de précautions.

L'invention a notamment pour objectif de pallier ces différents inconvénients de l'état de l'art.

Plus précisément, un objectif de l'invention est de fournir un dispositif affleurant d'obturation d'une baie ménagée dans la carrosserie d'un véhicule, qui soit simple et rapide à fabriquer et à assembler.

Un autre objectif de l'invention est de fournir un tel dispositif, qui soit facile à monter sur la carrosserie d'un véhicule, sans moyen complexe.

L'invention a également pour objectif de fournir un tel dispositif d'obturation, qui soit pratique à transporter et à stocker, et qui soit d'une maintenance aisée et peu coûteuse.

Encore un objectif de l'invention est de fournir un tel dispositif, qui soit d'un coût de revient réduit, tant en en ce qui concerne la fabrication que l'assemblage et le montage.

Un objectif complémentaire de l'invention est de fournir un procédé de fabrication (fabrication des pièces constitutives et leur assemblage) et de montage sur la carrosserie du véhicule à la fois simple, rapide et peu coûteuse.

Ces objectifs, ainsi que d'autres qui apparaitront plus clairement par la suite, sont atteints selon l'invention par un dispositif d'obturation d'une baie ménagée dans la carrosserie d'un véhicule tel que présenté en revendication 1, le dispositif d'obturation de la baie étant du type divulgué par FR-A-2 552483.

La présence de ces prolongements permet de faciliter le montage de la partie mobile. De cette façon, l'assemblage peut aisément être réaliser, soit lors de la fabrication, soit directement sur la carrosserie du véhicule.

Selon une caractéristique avantageuse de l'invention, au moins un desdits éléments de support et/ou de guidage est solidarisé à ladite carrosserie, par au moins une de ses extrémités.

Ainsi, en cas de bris d'une des parties de l'ensemble fixe, la partie mobile reste maintenue en place, et ne risque pas de blesser un passager du véhicule.

Selon l'invention, ladite première partie fixe comprend un panneau unique en forme générale de "C" ou de "U", deux éléments de support et/ou de guidage parallèles se prolongeant respectivement à partir de chacune des deux extrémités dudit panneau unique.

Le fait que ce panneau soit unique simplifie bien évidemment l'assemblage et le montage du dispositif. Par ailleurs, cette forme rend plus facile la découpe ou la réalisation de l'ouverture (l'intérieur du "C" ou du "U"). En effet, il n'est plus nécessaire de réaliser une ouverture complète dans une pièce pleine. Il suffit de réaliser les trois côtés correspondant à l'intérieur du "C" et du "U", le quatrième côté étant formé par la seconde partie fixe.

La fabrication peut encore être simplifiée. Selon un second mode de réalisation particulier de l'invention, ladite première partie fixe comprend au moins deux panneaux fixes portant chacun un élément de support et/ou de guidage.

Notamment, ladite première partie fixe peut comprendre au moins un panneau intermédiaire reliant lesdits panneaux fixes portant chacun un élément de support et/ou de guidage.

Bien sûr, l'assemblage du dispositif est alors un peu plus complexe, et une étanchéisation adaptée doit être prévue entre les différents éléments.

Selon différents modes de réalisation de l'invention, au moins un desdits éléments de support et/ou de guidage peut être :
- rapporté par collage, clipsage ou bouterollage sur ladite première partie fixe ;
- soudé à ladite première partie fixe ;
- injecté dans ladite première partie fixe ; ou
- découpé dans le matériau de ladite première partie fixe.

Selon un mode de réalisation avantageux de l'invention, le dispositif d'obturation comprend au moins un élément de liaison, solidarisant lesdits éléments de support et/ou de guidage, de façon à assurer leur bon positionnement.

Ainsi, la mise en place est simplifié, et un bon écartement est garanti.

De façon préferentielle, on prévoit des moyens pour assurer l'étanchéité, d'une part entre ledit ensemble fixe et ledit ensemble mobile, lorsque ce dernier est en position d'obturation de ladite ouverture, et d'autre part entre les différentes parties dudit ensemble fixe.

Les mouvements de la partie mobile par rapport à la partie fixe peuvent être variés, selon les modes de réalisation.

Dans un premier mode de réalisation, relativement simple, ledit panneau mobile est monté sur deux éléments de support et/ou de guidage de façon à pouvoir coulisser dans un plan sensiblement parallèle au plan formé par ledit ensemble fixe.

Selon un deuxième mode de réalisation, ledit panneau mobile est monté de façon à venir dans le plan formé par ledit ensemble fixe, en position fermée. Cette technique permet d'obtenir un aspect esthétique amélioré, et une meilleure étanchéité.

Dans ce cas, ledit panneau mobile peut présenter une cinématique décomposée en deux déplacements indépendants :
- un déplacement de verrouillage/déverrouillage, perpendiculaire au plan formé par ledit ensemble fixe, et permettant le passage dudit plan formé par ledit ensemble fixe à un plan de coulissement, sensiblement parallèle audit plan formé par ledit ensemble fixe ;
- un déplacement par coulissement dans ledit plan de coulissement.

Selon un autre mode de réalisation, ledit panneau mobile présente une cinématique continue, assurant le passage progressif du plan formé par ledit ensemble fixe à un plan de coulissement sensiblement parallèle audit plan formé par ledit ensemble fixe.

Selon les besoins et les utilisations, ledit plan de coulissement peut se trouver à l'intérieur ou à l'extérieur du véhicule.

L'invention concerne également un procédé de fabrication et d'assemblage d'un tel dispositif d'obturation d'une baie ménagée dans la carrosserie d'un véhicule. Ce procédé comprend notamment les étapes suivantes :
- réalisation d'une première partie fixe comprenant au moins un premier panneau fixe portant au moins un desdits éléments de support et/ou de guidage présentant un prolongement s'étendant au-delà dudit premier panneau fixe,
- assemblage d'au moins un panneau mobile formant ladite partie mobile sur le ou lesdits prolongements dudit ou desdits éléments de support et/ou de guidage;
- montage d'une seconde partie fixe comprenant au moins un second panneau fixe, venant recouvrir sensiblement la surface de ladite baie non couverte par ledit premier ensemble fixe et ladite partie mobile lorqu'elle est en position d'obturation ménagée dans l'ensemble fixe. Comme déjà indiqué, l'assemblage du dispositif peut se faire à différents moments. Ainsi, selon un premier mode de réalisation, ledit dispositif est rapporté sur ladite carrosserie sous la forme d'un élément unique, préalablement fabriqué et monté.

Selon un autre mode de réalisation avantageux, au moins une desdites étapes de montage est effectuée après installation des autres éléments dudit dispositif d'obturation sur ladite carrosserie.

D'autres caractéristiques et avantages de l'invention apparaitront à la lecture de la description suivante d'un mode de réalisation préférentiel de l'invention, donné à titre de simple exemple illustratif et non limitatif, et des dessins annexés, parmi lesquels :
- la figure 1 illustre, de façon schématique, un dispositif d'obturation selon l'invention, destiné à être mis en place dans une baie d'un véhicule ;
- les figures 2A, 2B et 2C présentent les trois éléments constitutifs du dispositif de la figure 1, à savoir respectivement un premier élément fixe en "C", portant les rails de coulissement, (figure 2A), la partie mobile (figure 2B) et un second élément fixe (figure 2C) ;
- les figures 3 et 4 illustrent deux autres modes de réalisation de l'élément fixe en "C" de la figure 2A ;
- la figure 5 est un schéma synoptique simplifié d'un procédé de fabrication et d'assemblage du dispositif d'obturation de la figure 1 ;
- la figure 6 présente un autre mode de réalisation de l'élément de la figure 2A, comprenant des éléments de liaison pour assurer le bon positionnement des rails ;
- la figure 7 illustre un détail du montage de la partie mobile d'un mode de réalisation d'un dispositif selon la figure 1.

L'invention concerne donc une nouvelle technique pour l'obturation d'une baie ménagée dans la carrosserie, qui offre un aspect continu avec la carrosserie, et qui permet la présence d'une ouverture qui peut être obturée par un élément coulissant.

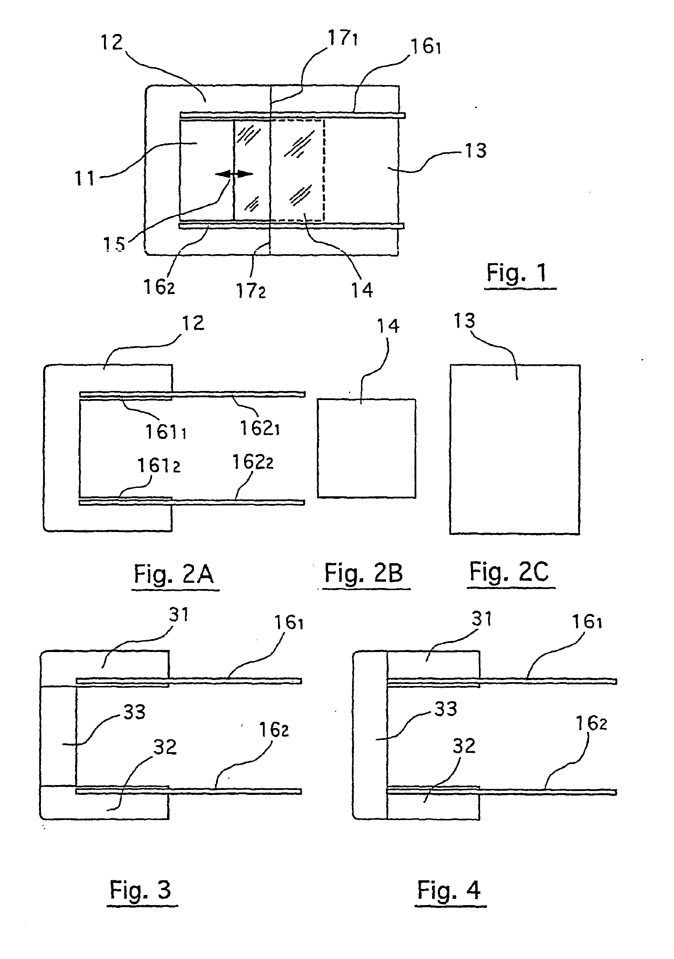

Un tel dispositif d'obturation est illustré en figure 1. Il est destiné à être monté sur la carrosserie d'un véhicule, dans laquelle une baie correspondante est prévue.

Ce dispositif comprend une partie fixe dans laquelle est ménagée une ouverture 11. La partie fixe comprend deux éléments :
- un élément 12 en forme générale de "C" ( ou en "U" si l'ouverture se fait verticalement. Bien sûr, le "C" ou le "U" peuvent être retournés) ;
- un élément 13 essentiellement rectangulaire.

La partie mobile comprend un panneau 14, dont le format est prévu pour qu'il puisse obturer l'ouverture 11. Il peut coulisser (flèche 15) sur deux rails parallèles 16₁, et 16₂, pour fermer et libérer l'ouverture 11.

La façon dont le panneau mobile 14 est montée sur les rails 16₁ et 16₂, la cinématique de coulissement et de verrouillage et les moyens de verrouillage ne sont pas décrits. Ils peuvent être de tous types adéquats, ainsi que cela est discuté par la suite.

Selon l'invention, le dispositif est donc constitué des trois pièces indépendantes illustrées aux figures 2A, 2B et 2C.

L'élément 12 en forme de "C" de la figure 2A est la pièce essentielle selon la technique de l'invention. Le panneau 12 porte en effet, seul, les rails de maintien et de coulissement 16₁ et 16₂. Ces derniers présentent donc :
- une partie 161₁,161₂ fixée à l'élément 12 (ou solidaire de celui-ci) ; et
- un prolongement 162₁, 162₂, s'étendant librement au-delà des deux branches du "C".

L'élément en "C" 12 est par exemple réalisé en matière plastique présentant de bonnes caractéristiques mécaniques en température. Dans ce cas, l'élément 12 peut intégrer les rails 16₁ et 16₂, qui sont alors réalisés directement dans le matériau.

Il peut également être réalisé en verre, ou en acier ou en aluminium roulé.

Les rails 16₁ et 16₂ peuvent être rapportés sur l'élément 12 par collage, bouterollage, clipsage,... Ils sont par exemple réalisés en plastique ou en aluminium.

Les prolongements 162₁ et 162₂ permettent d'assembler très facilement le dispositif. Il suffit en effet d'y rapporter le panneau mobile 14 (figure 2B). Le montage est simplifié, aucun élément gênant n'était présent. Puis l'on place le second élément fixe (figure 2C) le long de l'élément en "C".

Ce panneau fixe 13 peut être solidarisé aux prolongements 162₁ et 162₂ des rails. On notera (figure 1) que ces prolongements 162₁ et 162₂ s'étendent préférentiellement légèrement au-delà du panneau 13, de façon qu'ils puissent être solidarisés à la carrosserie. On peut également prévoir que les rails soient solidarisés à la carrosserie à leur autre extrémité.

Dans l'hypothèse où la partie en "C" 12 est opaque et/ou d'une couleur particulière, les portions en regard du panneau 13 sont préférentiellement traitées de la même façon. En revanche, la partie centrale, correspondant au panneau mobile, est avantageusement transparente.

Outre la simplification de l'assemblage, par rapport à la technique selon laquelle la partie fixe est en une seule pièce, il apparait clairement que la fabrication est plus simple : il est bien sûr plus aisé de réaliser l'ouverture sur trois côtés dans la pièce en "C" 12 que de découper (ou réserver) une ouverture complète, sur quatre côtés.

On peut encore simplifier la fabrication, en construisant la pièce en "C" en plusieurs éléments ainsi que cela est illustré en figures 3 et 4.

Sur ces deux figures, la pièce 12 est formée par trois éléments rectangulaires :
- deux panneaux 31 et 32, portant chacun un rail 162₁ et 162₂ ;
- un panneau intermédiaire 33, reliant les deux panneaux 31 et 32 pour former le "C".

D'autres modes de réalisation sont bien sûr envisageables, tels que des constructions en deux parties, le panneau intermédiaire 33 pouvant être :
- solidaire de l'un ou l'autre des panneaux 31 et 32 ;
- réparti entre les panneaux 31 et 32, avec par exemple une coupure en son milieu ;
- ou tout simplement supprimé (la carrosserie étant prévue à cet effet).

De même, si nécessaire, le panneau mobile 14 et/ou le second panneau fixe 13 peuvent être réalisé en plusieurs parties.

Bien sûr, entre chacune de ces parties, des moyens d'étanchéité sont avantageusement prévus. Ainsi, dans le cas de figure 1, un joint (par exemple en mastic ou un matériau similaire) devra être prévu aux zones de liaison 17₁ et 17₂.

Selon un autre mode de réalisation, on peut prévoir que le joint prévu pour assurer l'étanchéité lorsque l'ouverture 11 est fermée se prolonge au niveau des zones de liaison 17₁ et 17₂.

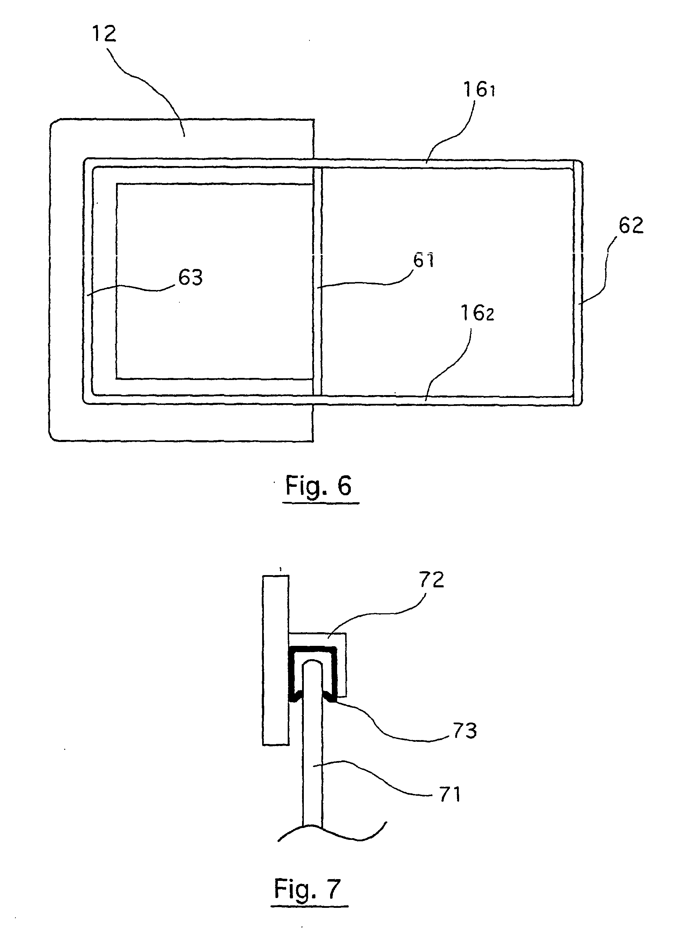

Afin d'assurer le parfait positionnement des prolongements 162₁ et 162₂, un ou plusieurs éléments de liaison 61, 62 solidarisant ces prolongements peuvent être prévus, ainsi que cela est illustré en figure 6.

L'élément de liaison 61 peut par exemple relier les deux rails au voisinage de la pièce 12 en "C". L'élément de liaison 62 relie quant à lui les extrémités de ces rails. Il peut avantageusement être solidarisé à la carrosserie, lors du montage.

L'ensemble formé par les rails 16₁, 16₂ et les éléments de liaison 61 et 62 peut être monté avant fixation au panneau en "C". Il peut également être monobloc. Ainsi, l'écartement est garanti, et un jeu léger est acceptable lors de la fixation au panneau en "C".

Un troisième élément de liaison peut être prévu le long de la pièce en "C" 12. Selon une autre technique, les deux rails peuvent former une pièce unique, ayant également une forme en "C" 63, qui suit sensiblement celle de la pièce en "C" 12.

Jusqu'ici, on n'a pas décrit le mouvement relatif de la partie mobile par rapport à la partie fixe, celui-ci pouvant être de tous types adéquats, indépendamment de la structure du dispositif d'obturation selon l'invention.

On peut notamment prévoir que le (ou les) panneau mobile puisse coulisser dans un plan sensiblement parallèle à celui formé par l'ensemble mobile.

Dans un mode de réalisation simplifié, illustré par la figure 7, un panneau mobile 71 est guidé en coulissement par des rails 72, qui comprennent un joint interne 73 de maintien et de guidage. Dans ce cas, on prévoit avantageusement des moyens d'étanchéité, lorsque le panneau mobile est en position fermée.

Selon un autre mode de réalisation, le panneau mobile ne reste pas dans un plan unique parallèle à l'ensemble fixe, mais vient au contraire dans le plan de cet ensemble fixe, en position fermée, pour obturer l'ouverture. On obtient ainsi, au prix d'un guidage plus complexe, une meilleure étanchéité et un meilleur aspect esthétique, le dispositif d'obturation apparaissant, en position fermée, comme une portion de la carrosserie, sans rupture visuelle.

Le guidage de la partie mobile peut être effectué en une seule opération progressive, ainsi que cela est proposé dans le document EP -A-0 778 168 déjà cité. Selon une autre technique, la cinématique du panneau mobile peut être décomposée en deux mouvements :
- un mouvement de coulissement parallèle au plan formé par l'ensemble fixe ;
- un mouvement de verrouillage/déverrouillage perpendiculaire à ce plan.

Une telle cinématique est notamment décrite dans le document EP -A- 0 857 844, au nom du même déposant que la présente demande de brevet.

Dans les deux documents précités, la partie mobile coulisse à l'intérieur du véhicule. Il est cependant possible que le coulissement s'effectue à l'extérieur du véhicule, en adaptant à cet effet les organes d'articulation portant la partie mobile et montrés dans les rails.

On notera par ailleurs que le dispositif d'obturation de l'invention n'est pas forcément strictement plan. Sa surface peut bien sûr être incurvée, en particulier pour suivre les lignes et la forme de la carrosserie du véhicule. En conséquence, le terme "plan" (plan de l'ensemble fixe, plan de coulissement) doit bien sûr être compris comme se référant à la surface du dispositif. Notamment, le coulissement peut suivre une trajectoire courbe, dès lors que les rails et les moyens d'articulation qu'ils contiennent sont prévus à cet effet.

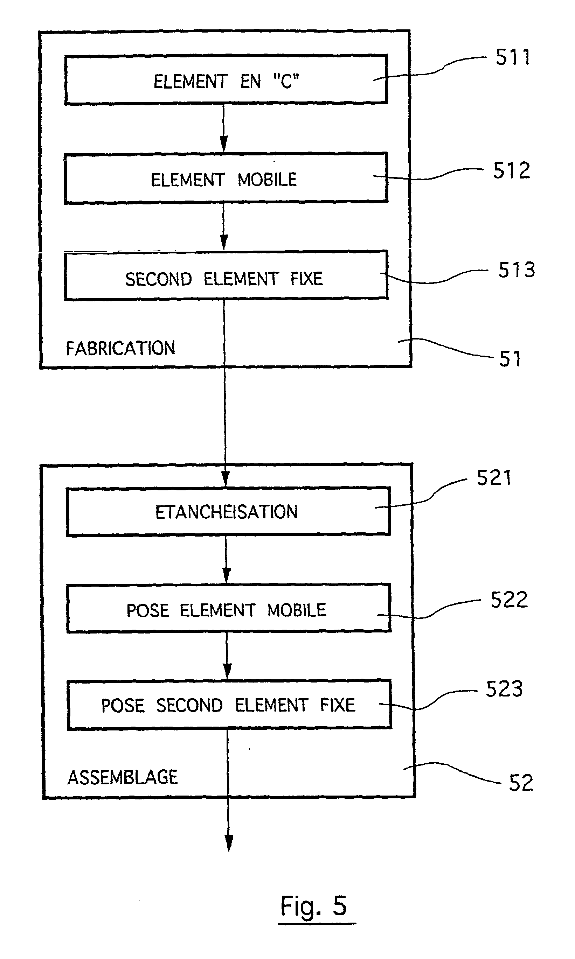

La figure 5 présente le procédé d'obtention d'un dispositif tel que celui illustré en figure 1.

On fabrique (51) tout d'abord indépendamment chacune des pièces constitutrices du dispositif, puis on procède à l'assemblage 52.

La fabrication 51 comprend donc :
- la réalisation 511 de l'élément en "C" (ou des différents éléments le constituant (figures 3 et 4)), y compris les rails ;
- la réalisation 512 de l'élément mobile ;
- la réalisation 513 du second élément fixe.

L'assemblage 52 comprend quant à lui les étapes successives suivantes :
- étanchéisation 521, consistant à prévoir un joint entre les différentes pièces à assembler, et en particulier à l'intérieur de l'élément en "C', qui recevra la partie mobile ;
- pose 522 de l'élément mobile sur les prolongements des rails de la partie en "C" ;
- pose 523 de la partie fixe complémentaire, de façon à former le dispositif complet

Selon le mode de réalisation de la figure 6, l'étape 511 peut se décomposer en trois étapes :
- réalisation de l'élément en "C" ;
- réalisation de l'ensemble formé par les rails et les éléments de liaison ;
- solidarisation de cet ensemble sur l'élément en "C".

Bien sûr, les éléments de liaison peuvent également être rapportés après l'étape 511, et par exemple lors de l'assemblage 52.

Il convient de noter que l'assemblage 52 peut être réalisé en tout ou en partie sur la carrossserie d'un véhicule. Le dispositif peut donc être fourni assemblé au constructeur, qui en assure alors le montage en une seule pièce, ou en kit, sous la forme d'éléments séparés. Dans ce cas, l'étape 521 est précédée du montage de l'élément en "C" sur la carrosserie. Les éléments suivants sont rapportés directement, le dispositif étant complètement monté à la fin de l'étape 523.

## Revendications

1. Dispositif d'obturation d'une baie ménagée dans la carrosserie d'un véhicule, du type comprenant un ensemble fixe destiné à être rapporté sur ladite carrosserie et une partie mobile par rapport audit ensemble fixe, montée sur au moins un élément de support et/ou de guidage (161, 162) et pouvant venir obturer ou libérer une ouverture (11) ménagée dans ledit ensemble fixe,
ledit ensemble fixe comprenant une première partie fixe (12) comprenant au moins un premier panneau fixe portant au moins un élément de support et/ou de guidage (161, 162) présentant un prolongement (1621, 1622) s'étendant au-delà dudit premier panneau fixe, de façon qu'au moins un panneau mobile (14) formant ladite partie mobile puisse être monté sur le ou lesdits prolongements (1621, 1622) dudit ou desdits éléments de support et/ou de guidage,
**caractérisé en ce que** ladite première partie fixe présente une forme générale de « C » ou de « U », trois côtés de ladite ouverture (11) correspondant à l'intérieur dudit "C" ou dudit "U",
**en ce que** deux éléments de support et/ou de guidage (161, 162) parallèles se prolongent respectivement à partir de chacune des deux extrémités de ladite première partie fixe, et sont solidaires de la face dudit ensemble fixe dirigée vers l'intérieur dudit véhicule,
et **en ce que** ledit ensemble fixe comprend une seconde partie fixe comprenant au moins un second panneau fixe (13), venant recouvrir sensiblement la surface de ladite baie non couverte par ladite première partie fixe (12) et ladite partie mobile (14), lorsque cette dernière est en position d'obturation de ladite ouverture (11).

2. Dispositif d'obturation d'une baie selon la revendication 1, **caractérisé en ce qu'**au moins un desdits éléments de support et/ou de guidage (161, 162) est solidarisé à ladite carrosserie, par au moins une de ses extrémités.

3. Dispositif d'obturation d'une baie selon l'une quelconque des revendications 1 et 2, **caractérisé en ce que** ladite première partie fixe en forme générale de « C » ou de « U » comprend un panneau unique (12).

4. Dispositif d'obturation d'une baie selon l'une quelconque des revendications 1 et 2, **caractérisé en ce que** ladite première partie fixe en forme générale de « C » ou de « U » comprend au moins deux panneaux (31, 32) fixes portant chacun un élément de support et/ou de guidage.

5. Dispositif d'obturation d'une baie selon la revendication 4, **caractérisé en ce que** ladite première partie fixe comprend au moins un panneau intermédiaire (33) reliant lesdits panneaux fixes (31, 32) portant chacun un élément de support et/ou de guidage.

6. Dispositif d'obturation d'une baie selon l'une quelconque des revendications 1 à 5, **caractérisé en ce qu'**au moins un desdits éléments de support et/ou de guidage (161, 162) est :
- rapporté par collage, clipsage ou bouterollage sur ladite première partie fixe ;
- soudé à ladite première partie fixe ;
- injecté dans ladite première partie fixe ; ou
- découpé dans le matériau de ladite première partie fixe.

7. Dispositif d'obturation selon l'une quelconque des revendications 1 à 6, **caractérisé en ce qu'**il comprend au moins un élément de liaison (61, 62), solidarisant lesdits éléments de support et/ou de guidage (161, 162), de façon à assurer leur bon positionnement.

8. Dispositif d'obturation d'une baie selon l'une quelconque des revendications 1 à 7, **caractérisé en ce qu'**il comprend des moyens pour assurer l'étanchéité, d'une part entre ledit ensemble fixe et ledit ensemble mobile, lorsque ce dernier est en position d'obturation de ladite ouverture, et d'autre part entre les différentes parties dudit ensemble fixe.

9. Dispositif d'obturation selon l'une quelconque des revendications 1 à 8, **caractérisé en ce que** ledit panneau mobile (71) est monté sur deux éléments de support et/ou de guidage (72) de façon à pouvoir coulisser dans un plan sensiblement parallèle au plan formé par ledit ensemble fixe.

10. Dispositif d'obturation selon l'une quelconque des revendications 1 à 9, **caractérisé en ce que** ledit panneau mobile (14) est monté de façon à venir dans le plan formé par ledit ensemble fixe, en position fermée.

11. Dispositif d'obturation selon la revendication 10, **caractérisé en ce que** ledit panneau mobile (14) présente une cinématique décomposée en deux déplacements indépendants :
- un déplacement de verrouillage/déverrouillage, perpendiculaire au plan formé par ledit ensemble fixe, et permettant le passage dudit plan formé par ledit ensemble fixe à un plan de coulissement, sensiblement parallèle audit plan formé par ledit ensemble fixe ;
- un déplacement par coulissement dans ledit plan de coulissement.

12. Dispositif d'obturation selon la revendication 10, **caractérisé en ce que** ledit panneau mobile (14) présente une cinématique continue, assurant le passage progressif du plan formé par ledit ensemble fixe à un plan de coulissement sensiblement parallèle audit plan formé par ledit ensemble fixe.

13. Dispositif d'obturation selon l'une quelconque des revendications 11 et 12, **caractérisé en ce que** ledit plan de coulissement se trouve à l'intérieur du véhicule.

14. Dispositif d'obturation selon l'une quelconque des revendications 11 et 12, **caractérisé en ce que** ledit plan de coulissement se trouve à l'extérieur du véhicule.

15. Procédé de fabrication et d'assemblage d'un dispositif d'obturation selon l'une quelconque des revendications précédentes, **caractérisé en ce qu'**il comprend les étapes successives suivantes :
- réalisation de ladite première partie fixe (12) ;
- assemblage d'au moins un panneau mobile (14) formant ladite partie mobile sur le ou lesdits prolongements (162₁, 162₂) dudit ou desdits éléments de support et/ou de guidage ;
- montage de la seconde partie fixe comprenant au moins un second panneau fixe (13), venant recouvrir sensiblement la surface de ladite baie non couverte par ladite première partie fixe et ladite partie mobile, lorsqu'elle est en position d'obturation de l'ouverture (11).

16. Procédé de fabrication et de montage d'un dispositif d'obturation d'une baie selon la revendication 16, **caractérisé en ce que** ledit dispositif est rapporté sur ladite carrosserie sous la forme d'un élément unique, préalablement fabriqué et monté.

17. Procédé de fabrication et de montage d'un dispositif d'obturation d'une baie selon l'une quelconque des revendications 16 et 17, **caractérisé en ce qu'**au moins une desdites étapes de montage est effectuée après installation des autres éléments dudit dispositif d'obturation sur ladite carrosserie.

## Claims

1. Device for closing an opening provided in the bodywork of a vehicle, said device being of the type comprising a fixed assembly which is intended to be added onto the said bodywork and a part, which is movable in relation to the said fixed assembly, is fitted onto at least one supporting and/or guiding element (161, 162) and is capable of closing or unblocking an aperture (11) provided in the said fixed assembly;
the said fixed assembly comprising a first fixed part (12) comprising at least one first fixed panel which carries at least one supporting and/or guiding element (161, 162) having an extension (1621, 1622) which extends beyond the said first fixed panel, in such a way that at least one movable panel (14), which forms the said movable part, can be fitted onto the said extension or extensions (1621, 1622) of the said supporting and/or guiding element or elements;
**characterised in that** the said first fixed part has the general shape of a "C" or a "U", three sides of the said aperture (11) corresponding to the interior of the said "C" or the said "U";
**in that** two parallel supporting and/or guiding elements (161, 162) are extended, respectively, from each of the two ends of the said first fixed part and are integral with that face of the said fixed assembly which is directed towards the interior of the said vehicle;
and **in that** the said fixed assembly comprises a second fixed part comprising at least one second fixed panel (13) which covers substantially the surface of the said opening which is not covered by the said first fixed part (12) and the said movable part (14), when the latter is in the position in which it closes the said aperture (11).

2. Device for closing an opening, according to claim 1, **characterised in that** at least one of the said supporting and/or guiding elements (161, 162) is rendered integral with the said bodywork, by at least one of its ends.

3. Device for closing an opening, according to either of claims 1 and 2, **characterised in that** the said first fixed part in the general shape of a "C" or a "U" comprises a single panel (12).

4. Device for closing an opening, according to either of claims 1 and 2, **characterised in that** the said first fixed part in the general shape of a "C" or a "U" comprises at least two fixed panels (31, 32), each of which carries a supporting and/or guiding element.

5. Device for closing an opening, according to claim 4, **characterised in that** the said first fixed part comprises at least one intermediate panel (33) which connects the said fixed panels (31, 32), each of which carries a supporting and/or guiding element.

6. Device for closing an opening, according to any of claims 1 to 5, **characterised in that** at least one of the said supporting and/or guiding elements (161, 162) is:
- added onto the said first fixed part by bonding, clipping or snapping;
- welded to the said first fixed part;
- injected into the said first fixed part; or
- punched out of the material of the said first fixed part.

7. Closing device according to any of claims 1 to 6, **characterised in that** it comprises at least one linking element (61, 62) which renders the said supporting and/or guiding elements (161, 162) integral, so as to ensure correct positioning of the latter.

8. Device for closing an opening, according to any of claims 1 to 7, **characterised in that** it comprises means for ensuring sealing, on the one hand between the said fixed assembly and the said movable assembly, when the latter is in the position in which it closes the said aperture, and on the other hand between the different parts of the said fixed assembly.

9. Closing device according to any of claims 1 to 8, **characterised in that** the said movable panel (71) is fitted onto two supporting and/or guiding elements (72) in such a way as to be capable of sliding within a plane which is substantially parallel to the plane formed by the said fixed assembly.

10. Closing device according to any of claims 1 to 9, **characterised in that** the said movable panel (14) is fitted in such a way as to move into the plane formed by the said fixed assembly, when in the closed position.

11. Closing device according to claim 10, **characterised in that** the said movable panel (14) has kinematics which are broken down into two independent displacements:
- a locking/unlocking displacement which is perpendicular to the plane formed by the said fixed assembly and permits passage from the said plane formed by the said fixed assembly to a sliding plane which is substantially parallel to the said plane formed by the said fixed assembly;
- a displacement by sliding within the said sliding plane.

12. Closing device according to claim 10, **characterised in that** the said movable panel (14) has kinematics which are continuous and ensure progressive passage from the plane formed by the said fixed assembly to a sliding plane which is substantially parallel to the said plane formed by the said fixed assembly.

13. Closing device according to either of claims 11 and 12, **characterised in that** the said sliding plane is located inside the vehicle.

14. Closing device according to either of claims 11 and 12, **characterised in that** the said sliding plane is located outside the vehicle.

15. Method of manufacturing and assembling a closing device according to any of the preceding claims, **characterised in that** it comprises the following successive stages:
- the production of the said first fixed part (12);
- the assembly of at least one movable panel (14) which forms the said movable part on the said extension or extensions (162₁, 162₂) of the said supporting and/or guiding element or elements; and
- the fitting of the second fixed part comprising at least one second fixed panel (13) which covers substantially the surface of the said opening which is not covered by the said first fixed part and the said movable part, when it is in the position in which it closes the aperture (11).

16. Method of manufacturing and fitting a device for closing an opening, according to claim 15, **characterised in that** the said device is added onto the said bodywork in the form of a single element which has been manufactured and fitted together beforehand.

17. Method of manufacturing and fitting a device for closing an opening, according to either of claims 15 and 16, **characterised in that** at least one of the said fitting stages is carried out after the installation of the other elements of the said closing device on the said bodywork.

## Patentansprüche

1. Vorrichtung zum Verschließen einer Öffnung einer Fahrzeugkarosserie, die eine feststehende Gruppe umfasst, die auf die Karosserie aufgebracht werden soll und ein gegenüber der feststehenden Gruppe bewegliches Teil aufweist, das auf mindestens ein Trage- und/oder Führungselement (161, 162) montiert ist und eine in die feststehende Gruppe ausgebildete Öffnung (11) verschließen bzw. freigeben kann,
wobei die feststehende Gruppe ein erstes feststehendes Teil (12) umfasst, das mindestens ein erstes feststehendes Paneel aufweist, welches mindestens ein Trage- und/oder Führungselement (161, 162) trägt, das eine Verlängerung (1621, 1622) aufweist, die über das erste feststehende Paneel hinausragt, so dass mindestens ein das bewegliche Teil bildende bewegliche Paneel (14) auf die Verlängerung bzw. auf die Verlängerungen (1621, 1622) des Trag- und/oder Führungselementes bzw. der Trag- und/oder Führungselemente montiert werden kann,
**dadurch gekennzeichnet, dass** das erste feststehende Teil die allgemeine Form eines "C" bzw. eines "U" aufweist, wobei drei Seiten der besagten Öffnung (11) dem Inneren des "C" oder des "U" entsprechen und,
dass mindestens zwei parallele Trage- und/oder Führungselemente (161, 162) sich jeweils ausgehend von jedem Ende des ersten feststehenden Teils verlängern und mit der Fläche dieser feststehenden Fläche verbunden sind, die sich zum Fahrzeuginneren hin zugewendet und,
dass die feststehende Gruppe einen zweiten feststehenden Teil aufweist, das mindestens ein feststehendes Paneel (13) umfasst, welches in etwa die Fläche der besagten Öffnung in der Fahrzeugkarosserie, die nicht vom ersten feststehenden Teil (12) zudeckt wird, sowie den beweglichen Teil (14) zudeckt, wenn letzteres sich in der Verschlussposition für die Öffnung (11) befindet.

2. Vorrichtung zum Verschließen einer Öffnung nach Anspruch 1, **dadurch gekennzeichnet, dass** mindestens eines der Trage- und/oder Führungselemente (161, 162) an einem seiner Enden mit der Karosserie verbunden ist.

3. Vorrichtung zum Verschließen einer Öffnung nach einem der Ansprüche 1 und 2, **dadurch gekennzeichnet, dass** das erste feststehende Teil, das im allgemeinen die Form eines "C" oder eines "U" aufweist, ein einzelnes Paneel (12) umfasst.

4. Vorrichtung zum Verschließen einer Öffnung nach einem der Ansprüche 1 und 2, **dadurch gekennzeichnet, dass** das erste feststehende Teil mit der allgemeinen Form eines "C" oder eines "U" mindestens zwei feststehende Paneele (31, 32) umfasst, die jeweils ein Trage- und/oder Führungselement tragen.

5. Vorrichtung zum Verschließen einer Öffnung nach Anspruch 4, **dadurch gekennzeichnet, dass** das erste feststehende Teil mindestens ein Zwischenpaneel (33) umfasst, welches die feststehenden Paneele (31, 32) verbindet, die jeweils ein Trage- und/oder Führungselement tragen.

6. Vorrichtung zum Verschließen einer Öffnung nach einem der Ansprüche 1 bis 5, **dadurch gekennzeichnet, dass** mindestens eines der Trage- und/oder Führungselemente (161, 162):
- auf das erste feststehende Teil aufgeklebt, aufgeknipst oder genietet ist;
- an das erste feststehende Teil geschweißt ist;
- in das erste feststehende Teil gespritzt ist oder
- aus dem Material des ersten feststehenden Teils ausgeschnitten ist.

7. Vorrichtung zum Verschließen einer Öffnung nach einem der Ansprüche 1 bis 6, **dadurch gekennzeichnet, dass** sie mindestens ein Verbindungselement (61, 62) umfasst, das die Trage- und/oder Führungselemente (161, 162) derart verbindet, dass sie richtig positioniert sind.

8. Vorrichtung zum Verschließen einer Öffnung nach einem der Ansprüche 1 bis 7, **dadurch gekennzeichnet, dass** sie über Mittel verfügt, um die Wasserdichtheit einerseits zwischen der feststehenden und der beweglichen Gruppe, wenn sich letztere in der Position befindet, in der die Öffnung verschlossen ist, und andererseits zwischen den verschiedenen Teilen der feststehenden Gruppe sicher zu stellen.

9. Vorrichtung zum Verschließen einer Öffnung nach einem der Ansprüche 1 bis 8, **dadurch gekennzeichnet, dass** das bewegliche Paneel (71) derart auf zwei Trage- und/oder Führungselemente (72) montiert ist, dass es in einer Ebene gleiten kann, die in etwa parallel zu der Ebene der feststehenden Gruppe verläuft.

10. Vorrichtung zum Verschließen einer Öffnung nach einem der Ansprüche 1 bis 9, **dadurch gekennzeichnet, dass** das bewegliche Paneel (14) so montiert ist, dass es sich in der geschlossenen Position in der Ebene der feststehenden Gruppe befindet.

11. Vorrichtung zum Verschließen nach Anspruch 10, **dadurch gekennzeichnet, dass** das bewegliche Paneel (14) einen nach zwei selbständige Bewegungen aufgeteilten Bewegungsablauf aufweist:
- eine Verriegelungs-/Entriegelungsbewegung, die senkrecht zu der Ebene der feststehenden Gruppe verläuft und den Übergang von dieser Ebene zu einer Gleitebene ermöglicht, die in etwa parallel zu der benannten Ebene der feststehenden Gruppe verläuft;
- eine Gleitbewegung in der erwähnten Gleitebene.

12. Vorrichtung zum Verschließen nach Anspruch 10, **dadurch gekennzeichnet, dass** das bewegliche Paneel (14) einen kontinuierlichen Bewegungsablauf aufweist, der den allmählichen Übergang der von der feststehenden Gruppe gebildeten Ebene in eine Gleitebene sicherstellt, die in etwa parallel zur Ebene der feststehenden Gruppe liegt.

13. Vorrichtung zum Verschließen nach einem der Ansprüche 11 oder 12, **dadurch gekennzeichnet, dass** die Gleitebene innerhalb des Fahrzeugs liegt.

14. Vorrichtung zum Verschließen nach einem der Ansprüche 11 oder 12, **dadurch gekennzeichnet, dass** die Gleitebene außerhalb des Fahrzeugs liegt.

15. Verfahren zum Herstellen und Zusammenbauen einer Vorrichtung zum Verschließen nach einem der vorhergehenden Ansprüche,
**dadurch gekennzeichnet, dass** es die folgenden Schritte umfasst:
- Herstellung des ersten feststehenden Teils (12);
- Montage von mindestens einem beweglichen Paneel (14), welches das bewegliche Teil bildet, auf der Verlängerung bzw. auf den Verlängerungen (162₁, 162₂) des Trage- und/oder Führungselementes bzw. der Trage- und/oder Führungselemente;
- Montage des zweiten, mindestens ein zweites feststehendes Paneel (13) umfassendes Teil, welches in etwa die Fläche der Öffnung abdeckt, die nicht vom ersten feststehenden Teil und vom beweglichen Teil abgedeckt ist, wenn sich letztere in Verschlussposition der Öffnung (11) befinden.

16. Verfahren zum Herstellen und Zusammenbauen einer Vorrichtung zum Verschließen einer Öffnung nach Anspruch 15, **dadurch gekennzeichnet, dass** die Vorrichtung auf die Karosserie in Form eines vorher gefertigten und zusammengebauten Einzelelementes aufgesetzt wird.

17. Verfahren zum Herstellen und Zusammenbauen einer Vorrichtung zum Verschließen einer Öffnung nach einem der Ansprüche 15 und 16, **dadurch gekennzeichnet, dass** mindestens einer der Montageschritte nach dem Einbau der anderen Teile der Verschlussvorrichtung auf der Karosserie durchgeführt wird.
